# EUROPÄISCHE PATENTANMELDUNG

(11) **EP 2 458 404 A2**
(43) Veröffentlichungstag der Anmeldung: **30.05.2012**
(21) Anmeldenummer: 11188532.3
(22) Anmeldetag: 10.11.2011
(51) Int. Cl.: G01S 17/08, G01S 7/481, G01S 7/497

(54) **Distanzmessgerät und Vermessungssystem**

(30) Priorität: 30.11.2010 DE 102010062172
(71) Anmelder: HILTI Aktiengesellschaft, 9494 Schaan (LI)
(72) Erfinder: Tiefenthaler, Stefan, 6812 Meiningen (AT); Gogolla, Torsten, 9494 Schaan (LI)

(57) **Zusammenfassung**

Die Erfindung betrifft ein Distanzmessgerät (100), insbesondere in Form eines Handgeräts, für eine berührungslose Messung eines Abstands zu einem Zielobjekt (200), aufweisend ein Gehäuse (10), insbesondere ein zur händischen Benutzung ausgebildetes Gehäuse (10); eine im Gehäuse (10) angeordnete, optische Messstrahlung (1) nutzende Messeinrichtung (20), mittels welcher der Abstand zum Zielobjekt (200) berührungslos messbar ist, wenigstens einen am Gehäuse (10) angeordneten für die Messung nutzerauswählbaren Referenzanschlag (50A - 50D); eine am Gehäuse (10) angeordnete Bedien- und Eingabeanordnung (30) ausgebildet zur Bedienung wenigstens der Messeinrichtung (20); eine am Gehäuse (10) angeordnete mit der Bedien- und Eingabeanordnung (30) gekoppelte Sichtanzeige (40) auf der ein Bedienzustand und/oder der gemessene Abstand von einem ausgewählten Referenzanschlag (50A - 50D) zum Zielobjekt (200) darstellbar ist. Erfindungsgemäß ist vorgesehen, dass das Gehäuse (10) wenigstens ein von der Sichtanzeige (40) separates optisches Signalmittel (80A - 80D) aufweist, das dem Referenzanschlag (50A - 50D) eindeutig zugeordnet und im Falle des ausgewählten Referenzanschlags (50A - 50D) aktivierbar ist.

## Beschreibung

### Technisches Gebiet

Die Erfindung betrifft ein Distanzmessgerät, insbesondere in Form eines Handgeräts, für eine berührungslose Messung eines Abstands zu einem Zielobjekt gemäß dem Oberbegriff des Anspruchs 1.

### Stand der Technik

Distanzmessgeräte der eingangs genannten Art dienen der Distanzmessung mit optischen Mitteln. Allgemein bekannt sind Distanzmessverfahren, die beispielsweise die Laufzeit eines Lichtmodulationssignals, das beispielsweise als Lichtimpuls, Sinuswelle oder Pseudorauschen ausgebildet ist, ausnutzen und/oder die Phasenlage einer kohärenten optischen Strahlung, wie sie beispielsweise durch einen Laser geliefert wird. Bekannt ist auch das an sich bekannte Verfahren der Lasertriangulation. Je nach Bedarf können diese Verfahren zur Distanzmessung genutzt werden. Dazu sieht das Distanzmessgerät eine im Gehäuse angeordnete, entsprechend ausgebildete optische Messstrahlung nutzende Messeinrichtung vor, mittels welcher der Abstand zum Zielpunkt berührungslos messbar ist. So ist beispielsweise aus DE 100 51 302 C5 oder DE 101 12 833 C1 bekannt, eine Messeinrichtung geeignet einzurichten.

Ein Distanzmessgerät der eingangs genannten Art lässt sich besonders vorteilhaft als Handgerät zur Verfügung stellen, bei dem das Gehäuse, insbesondere durch Formgebung, Abmessung und dergleichen, zur händischen Benutzung ausgebildet ist. Grundsätzlich wird ein gemessener Abstand zu einem Zielobjekt in Bezug auf einen gehäuseinternen Referenznullpunkt bestimmt. Die Handhabung des Distanzmessgeräts erfolgt jedoch so, dass der Nutzer das Gehäuse oder eine Erweiterung desselben an einem Gegenstand, beispielsweise an einer Wand oder am Boden, anschlägt, dessen Abstand zum Zielobjekt gemessen werden soll. Dazu weist das Gehäuse wenigstens einen für die Messung nutzerauswählbaren Referenzanschlag auf. Ein solcher Referenzanschlag kann beispielsweise gehäusefest oder als Gehäuseverlängerung mit dem Gehäuse verbunden oder z.B. als Stativ mit dem Gehäuse verbindbar sein. Der Referenzanschlag lässt sich durch den Nutzer beispielsweise durch Aktivieren, Ausziehen oder Anbringen der Gehäuseverlängerung am Gehäuse auswählen. Gegebenenfalls kann ein Referenzanschlag auch über eine am Gehäuse angeordnete Bedien- und Eingabeanordnung ausgewählt werden. Eine Bedien- und Eingabeanordnung kann beispielsweise in Form einer Tastatur oder dergleichen gebildet sein. Durch eine derartige Nutzerauswahl wird eine für den Referenzanschlag maßgebliche, fixe Additionskonstante auf den Abstand zwischen Referenznullpunkt und Zielobjekt addiert, um nach Messung des Abstands dem Nutzer die korrekte Entfernung zwischen dem Gegenstand und dem Zielobjekt anzuzeigen. Der gemessene Abstand wird üblicherweise auf einer Sichtanzeige angezeigt. Die Sichtanzeige ist meistens auch mit der Bedien- und Eingabeanordnung gekoppelt, um auf der Sichtanzeige einen Bedienzustand des Distanzmessgeräts oder dergleichen anzuzeigen.

Im Stand der Technik gibt es unterschiedliche Ansätze, um eine grundsätzliche Messgenauigkeit solcher Distanzmessgeräte der eingangs genannten Art zu erhöhen. Beispielsweise zeigt DE 101 57 378 A1 ein Distanzmessgerät, bei dem eine temperaturbedingte Krümmung des Gehäuses durch Auslenken von Sende- und Empfangspfad des Distanzmessgeräts kompensiert wird. DE 102 32 878 A1 zeigt ein Distanzmessgerät, bei dem ein Messen von Entfernungen mit vorgebbaren Messunsicherheiten dadurch ermöglicht wird, dass eine entfernungsabhängige Messunsicherheit datenmäßig, beispielsweise in Form einer Kennlinie, in einem Speichermedium abgelegt ist.

Neben solchen gerätebedingten Messunsicherheiten besteht jedoch die größte Fehlergefahr dadurch, dass ein Distanzmessgerät unbeabsichtigt falsch gehandhabt wird. So ist aus DE 102 39 435 B4 ein Distanzmessgerät bekannt, bei dem eine Bedieneinheit zur Aussendung eines optischen Signals erlaubt, die Lichtquelle der Messeinrichtung ein- und/oder auszuschalten.

Wünschenswert ist ein Distanzmessgerät, bei dem darüber hinaus eine Messunsicherheit verbessert ist.

### Darstellung der Erfindung

An dieser Stelle setzt die Erfindung an, deren Aufgabe es ist, ein Distanzmessgerät anzugeben, das eine verbesserte Messsicherheit aufweist. Insbesondere soll das Distanzmessgerät in verbesserter Weise einen Nutzerfehler vermeiden können und dadurch eine verbesserte Messsicherheit aufweisen. Insbesondere soll eine Messsicherheit in Bezug auf einen nutzerauswählbaren Referenzanschlag verbessert sein.

Die Aufgabe wird durch die Erfindung mit einem eingangs genannten Distanzmessgerät gelöst, bei dem erfindungsgemäß die Merkmale des Anspruchs 1 vorgesehen sind. Erfindungsgemäß ist vorgesehen, dass das Gehäuse wenigstens ein von der Sichtanzeige separates optisches Signalmittel aufweist, das dem Referenzanschlag eindeutig zugeordnet ist und im Falle des ausgewählten Referenzanschlags aktiviert ist.

Die Erfindung geht von der Überlegung aus, dass bei allen bisher bekannten Konzepten der vom Nutzer ausgewählte Referenzanschlag vom Gerät in ungenügender Weise angezeigt wird, d.h. der ausgewählte Referenzanschlag wird vom Gerät entweder gar nicht angezeigt oder lediglich in der mit der Bedien- und Eingabeanordnung gekoppelten Sichtanzeige. Dies kann beispielsweise eine symbolische oder stilisierte Darstellung des Distanzmessgeräts und eine dazugehörige Darstellung des ausgewählten Referenzanschlags in der Sichtanzeige umfassen. Die Erfindung hat erkannt, dass eine solche Anzeige des Referenzanschlags unzureichend ist und deshalb eine hohe Messunsicherheit in sich birgt. Die Erfindung hat erkannt, dass eine solche Anzeige zu klein und/oder zu komplex ist, um vom Nutzer oftmals unter Zeitnot und bei zügiger Handhabung des Distanzmessgeräts ausreichend erkannt zu werden. Insbesondere bei vergleichsweise kleinen Darstellungen in monochromen Sichtanzeigen des Distanzmessgeräts hat sich die Gefahr, einer unbeabsichtigten Auswahl des Referenzanschlags durch einen Nutzer als vergleichsweise groß erwiesen. Unter einer unbeabsichtigten Fehlauswahl eines Referenzanschlags ist insbesondere zu verstehen, dass ein Nutzer einen Referenzanschlag - beispielsweise über die Bedien- und Eingabeanordnung - auswählt, dann jedoch einen anderen als den ausgewählten Referenzanschlag nutzt. Eine solche unbeabsichtigte Fehlauswahl des Referenzanschlags führt letztlich zu einer falschen Messreferenz in Bezug auf den Referenznullpunkt des Distanzmessgeräts. Dies kann unmittelbar zu Falschmessungen mit Fehlern größer als 10 cm führen. Das heißt, obwohl die Messung in Bezug auf den Referenznullpunkt des Distanzmessgeräts als solche vergleichsweise genau ist, wird durch Auswahl der fehlerhaften Additionskonstante ein Abstand zum Zielobjekt mit vergleichsweise großem und deswegen zum Teil fatalem Fehleraufschlag angezeigt.

Die Erfindung hat erkannt, dass die Darstellung des ausgewählten Referenzanschlags für den Nutzer von besonderem Vorteil ist und letztlich zu einer Erhöhung der Messsicherheit führt. Dies gilt insbesondere für Distanzmessgeräte, die eine Anzahl von Referenzanschlägen zur Auswahl für den Nutzer haben. So gibt es einen vergleichsweise wichtigen Referenzanschlag bei einem Distanzmessgerät an einer hinteren Gehäuseseite. Zudem gibt es jedoch auch andere oftmals dem Nutzer angebotene Referenzanschläge an anderen Gehäuseseiten oder an einer mit dem Gehäuse verbundenen Messverlängerung oder einem Anbringungsmittel für ein Stativ. Das Konzept der Erfindung bietet auch eine Verbesserung für ein Distanzmessgerät mit lediglich einem einzigen Referenzanschlag. Dem Nutzer wird in jedem Fall für den nutzerausgewählten Referenzanschlag durch das von der Sichtanzeige separat gebildete optische Signalmittel in aktivierter Form eindeutig und deutlich angezeigt, dass ein Referenzanschlag ausgewählt ist und welcher Referenzanschlag ausgewählt ist. Selbst bei hastiger Handhabung des Distanzmessgeräts ist ein Nutzer deswegen in der Lage, den ausgewählten Referenzanschlag schnell zu erfassen. Ein Nutzer kann somit bei Bedarf korrigieren, in jedem Fall aber sicherstellen, dass auch der nutzerausgewählte Referenzanschlag am Gegenstand angeschlagen wird, um den Abstand zu einem Zielobjekt vom Gegenstand zu messen. Die Gefahr eines Anschlagens eines nicht ausgewählten und damit falschen Referenzanschlags durch einen Nutzer ist weitgehend vermieden.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Im Rahmen einer besonders bevorzugten Weiterbildung korrelieren eine Position des Referenzanschlags und die Ausgestaltung eines zugeordneten optischen Signalmittels am Gehäuse in vorbestimmter Weise derart, dass ein Nutzer mit dem zugeordneten Signalmittel unmittelbar die Position des Referenzanschlags assoziiert. Mit anderen Worten ist das Signalmittel derart ausgestaltet, dass es dem Nutzer einen Hinweis auf die Position des Referenzanschlags gibt. Der Vorteil eines für den Nutzer deutlichen und mit der Position des Referenzanschlags assoziierbaren optischen Signalmittels - separat von der Sichtanzeige des Gehäuses - liegt darin, dass sich das Distanzmessgerät praktisch intuitiv handhaben lässt. Eine größte und mit hoher Wahrscheinlichkeit auftretende Fehlerquelle ist praktisch sicher ausgeschlossen. Besonders vorteilhaft sind eine Position des Referenzanschlags und ein Platz des zugeordneten optischen Signalmittels am Gehäuse vorbestimmt derart korreliert, dass mit einem Platz des zugeordneten optischen Signalmittels die Position des Referenzanschlags assozüerbar ist. Insbesondere ist ein Platz des zugeordneten aktivierten optischen Signalmittels zu einer Position des ausgewählten Referenzanschlags näher benachbart als zu einer Position eines nicht ausgewählten Referenzanschlags. Vorteilhaft sieht ein Nutzer bereits am Gehäuse welchen Referenzanschlag er ausgewählt hat. Vorteilhaft ist ein Nutzer in der Lage, das Gehäuse intuitiv mit demjenigen Referenzanschlag an einem Gegenstand anzuschlagen, welcher dem Platz des optischen Signalmittels am nächsten ist. Beispielsweise kann in einer besonders vorteilhaften Weise das optische Signalmittel direkt am bzw. deckungsgleich mit dem ausgewählten Referenzanschlag aktiviert sein.

Als besonders vorteilhaft hat sich eine Weiterbildung erwiesen, bei welcher das Gehäuse eine Anzahl von für die Messung nutzerauswählbaren Referenzanschlägen und eine Anzahl von vereinzelten optischen Signalmitteln aufweist. Vorteilhaft ist jedem einzelnen Referenzanschlag separat jeweils eines der vereinzelten optischen Signalmittel eindeutig zugeordnet. Bei dieser Weiterbildung wird eine Fehlauswahl eines Referenzanschlags vermieden bzw. vermieden, dass ein anderer als der nutzerausgewählte Referenzanschlag dann tatsächlich zur Messung des Abstands zum Zielobjekt genutzt wird.

Vorteilhaft umfasst die Anzahl von Referenzanschlägen vor allem einen gehäusefesten Referenzanschlag. Dies kann beispielsweise insbesondere ein hinterer Referenzanschlag sein, welcher an einer hinteren Gehäuseseite angeordnet ist. Zusätzlich oder alternativ können dies auch ein oder mehrere weitere Referenzanschläge sein, wie beispielsweise ein seitlicher Referenzanschlag, ein vorderer Referenzanschlag, ein oberer oder unterer Referenzanschlag oder ein ausfahrbarer oder ausklappbarer Referenzanschlag. Unter einem mit dem Gehäuse verbundenen Referenzanschlag ist jeder Referenzanschlag zu verstehen, welcher nicht gehäusefest ist. Dies kann beispielsweise ein Referenzanschlag sein, der an einer mit dem Gehäuse verbundenen Messverlängerung angeordnet ist. Dies kann auch ein Referenzanschlag sein, der an einem mit dem Gehäuse verbundenen Stativ angeordnet ist. Darunter ist insbesondere auch eine Position einer Stativschraube oder ein Stativansatz am Gehäuse zu verstehen. Darüber hinaus können weitere Referenzanschläge vorgesehen sein, denen ein vereinzeltes optisches Signalmittel separat zugeordnet ist.

Ein optisches Signalmittel ist in besonders bevorzugter Weise in Form eines Leuchtmittels, wie einer Leuchtdiode, einer Signallampe oder dergleichen, gebildet. Das Leuchtmittel ist insbesondere zur Aussendung eines Lichtsignals gebildet. Ein Lichtsignal muss nicht kontinuierlich, sondern kann auch blinkend oder mit unterschiedlichen Helligkeiten ausgesendet werden. Solche und andere ein Leuchtmittel betreffende Maßnahmen erhöhen die Wahrnehmung des optischen Signalmittels durch einen Nutzer beträchtlich.

Darüber hinaus kann die Ausgestaltung des zugeordneten optischen Signalmittels am Gehäuse vorteilhaft eine oder mehrere weitere Gestaltungen umfassen. So kann beispielsweise die Farbgestaltung oder Größengestaltung des Signalmittels geeignet gewählt werden, um dem Nutzer eine Assoziation zum ausgewählten Referenzanschlag zu geben. Dies betrifft auch insbesondere die Form des optischen Signalmittels, das beispielsweise mit einer Richtungsgestaltung - etwa in Form eines Pfeils oder dergleichen - versehen sein kann, um auf den ausgewählten Referenzanschlag hinzuweisen.

In einer besonders bevorzugten Weiterbildung ist die optische Messstrahlung nutzende Messeinrichtung ausgebildet, den Abstand zu einem Zielobjekt über eine Laufzeitmessung zu erfassen. Vorzugsweise weist die Messeinrichtung eine Lasereinheit und eine Sende- und Empfangsoptik auf. Der Sendeoptik ist vorzugsweise ein eine optische Achse aufweisender optischer Sendepfad zur Aussendung von Messstrahlung auf das Zielobjekt zugeordnet. Der Empfangsoptik ist vorzugsweise ein eine optische Achse aufweisender optischer Empfangspfad zum Empfang von vom Zielobjekt reflektierter Messstrahlung zugeordnet.

### Ausführungsbeispiele

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
- Fig. 1:: eine schematische Darstellung eines Distanzmessgeräts gemäß einer bevorzugten Ausführungsform zur Erläuterung der grundsätzlichen Funktionsweise in einer Frontansicht (a) und einer Seitenansicht (b);
- Fig. 2:: zwei bevorzugte Varianten des Distanzmessgeräts der Fig. 1 mit biaxialer Messeinrichtung (a) und koaxialer Messeinrichtung (b);
- Fig. 3:: eine Zusammenschau dreier unterschiedlicher Messsituationen mit einem Distanzmessgerät der Fig. 1 unter Nutzung unterschiedlicher Referenzanschläge am Gehäuse des Distanzmessgeräts;
- Fig. 4:: in Ansichten (a) bis (e) fünf verschiedene Bediensituationen eines Distanzmessgeräts mit jeweils unterschiedlich ausgewähltem Referenzanschlag und entsprechend unterschiedlich zugeordnetem optischen Signalmittel, wobei das optische Signalmittel vorliegend in Form eines von einer Leuchtdiode ausgebildeten Leuchtfeldes gebildet ist;
- Fig. 5:: das Distanzmessgerät der Fig. 4 unter Darstellung aller Leuchtfelder zur Bildung von optischen Signalmitteln, die am Gehäuse separat von der Sichtanzeige gebildet sind, in einer Frontansicht (a) und einer Seitenansicht (b).

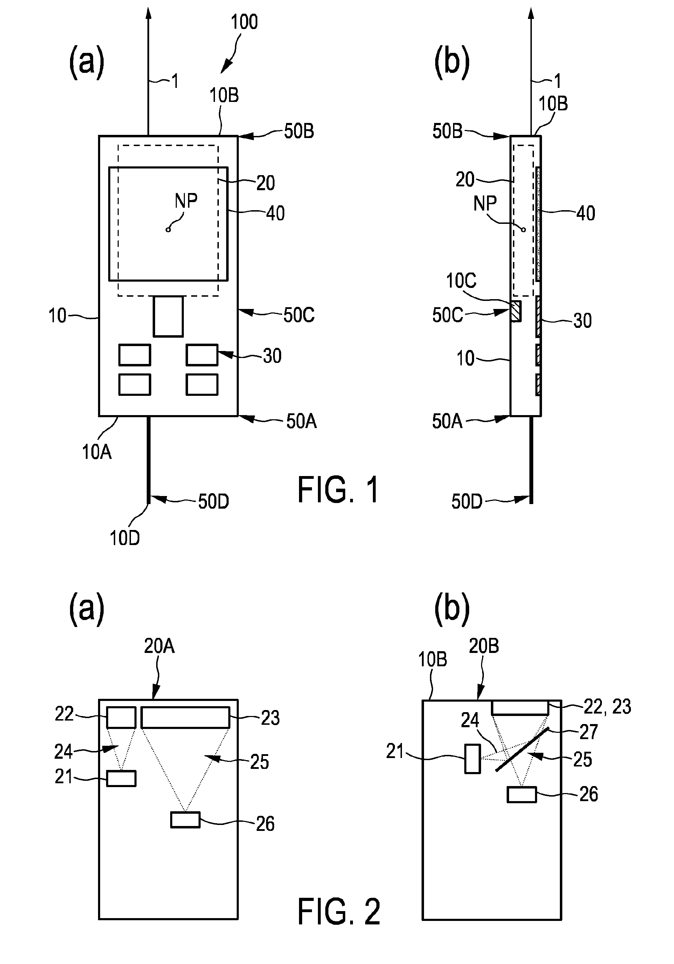

Fig. 1 zeigt ein Distanzmessgerät 100 in Form eines Handgeräts für eine berührungslose Messung eines Abstands zu einem Zielobjekt, wobei das Distanzmessgerät 100 links in Ansicht (a) in einer Frontansicht auf eine Bedienerseite des Gehäuses 10 gezeigt ist und rechts in Ansicht (b) in einer Seitenansicht des Gehäuses 10 gezeigt ist - die Bestandteile des Distanzmessgeräts 100 sind schematisch dargestellt.

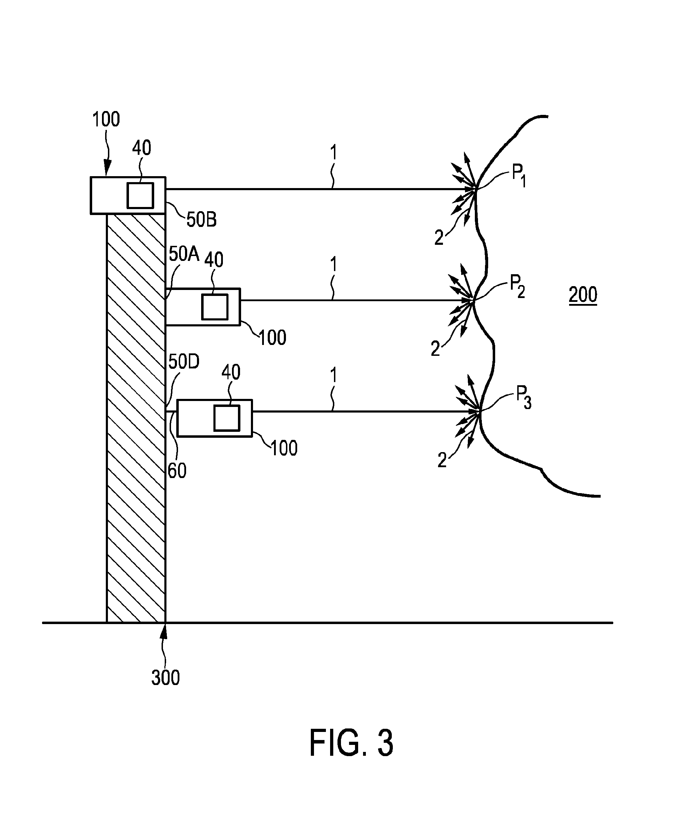

Das auch als handgehaltene Laserdistanzmessgerät zu bezeichnende Distanzmessgerät 100 weist ein Gehäuse 10 auf, das zur händischen Benutzung ausgebildet ist; vorliegend nicht unwesentlich größer als die Fläche einer Hand ist und eine entsprechende Haptik, ggf. auch Ergonomie, aufweist - gleichwohl ist das Gehäuse 10 der Einfachheit halber rechteckig dargestellt. Im Gehäuse 10 ist - vorliegend punktiert dargestellt - eine auch als Laserdistanzmesseinheit zu bezeichnende optische Messstrahlung 1 nutzende Messeinrichtung 20 untergebracht. Mögliche Varianten der Messeinrichtung 20 sind in Fig. 2 (a) und Fig. 2 (b) dargestellt. Die unterschiedlichen Handhabungssituationen zur berührungslosen Messung eines Abstands zu einem Zielobjekt sind in Fig. 3 näher dargestellt.

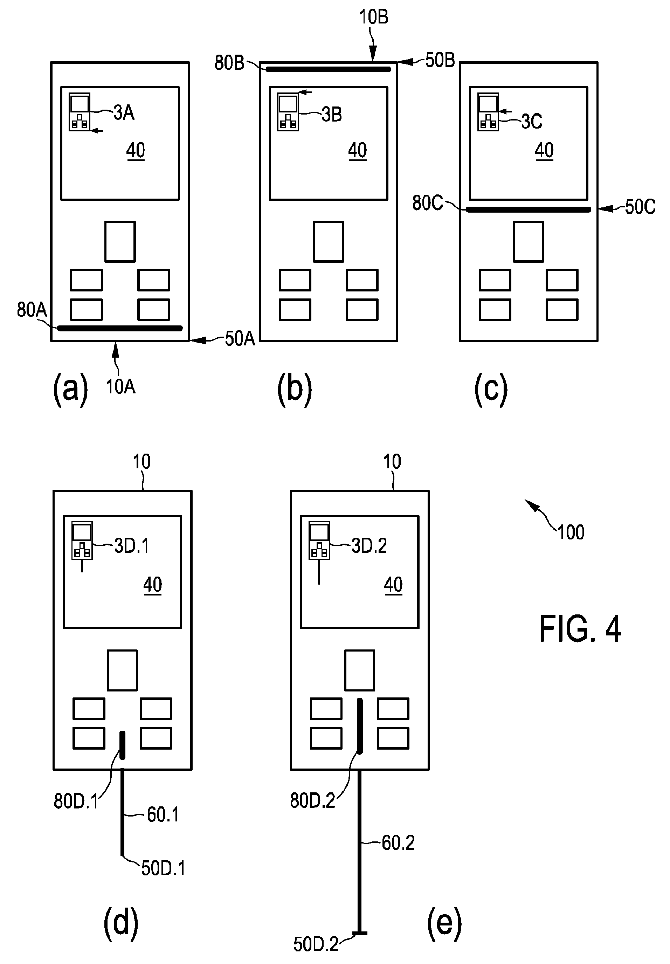

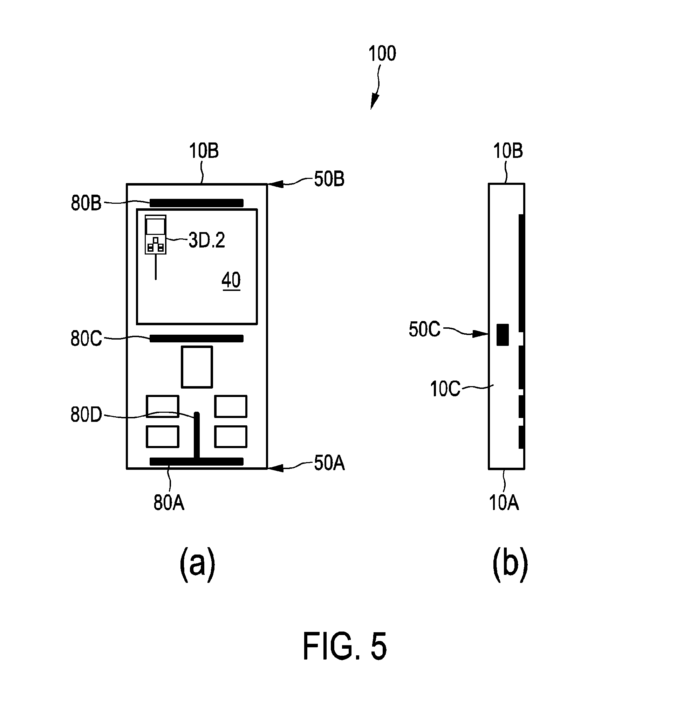

Das Distanzmessgerät 100 weist weiter eine am Gehäuse 10 angeordnete Bedien- und Eingabeanordnung 30 auf, die vorliegend als in die Bedienseite des Gehäuses 10 eingelassene Tastatur gebildet ist. Auf der Bedienseite des Gehäuses 10 ist auch eine Sichtanzeige 40 eingelassen, auf der vorliegend sowohl der gemessene Abstand von einem Zielobjekt als auch der Bedienzustand des Distanzmessgeräts 100 anzeigbar ist. Über die Bedien- und Eingabeanordnung 30 lässt sich vorliegend die Messeinrichtung 20 bedienen als auch einer der im Folgenden erläuterten Referenzanschläge des Gehäuses 10 auswählen. Während sich die Messung über die optische Messstrahlung 1 - hier beispielsweise ein Laserstrahl - auf einen gehäuseinternen Referenznullpunkt NP bezieht, wird ein Nutzer regelmäßig den Abstand zum Zielobjekt in Bezug auf einen der Referenzanschläge 50A bis 50D messen wollen, die in Bezug auf Fig. 3 bis Fig. 5 näher erläutert sind und in Fig. 1 bereits teilweise gezeigt sind. Mit anderen Worten wird ein Nutzer durch Auswahl eines Referenzanschlags 50A bis 50D an einer der Gehäuseseiten 10A bis 10C des Gehäuses 10 bzw. an einer Spitze 10D einer Messverlängerung - beispielsweise durch Aktivieren desselben oder durch Auswahl über die Bedien- und Eingabeanordnung 30 - dem Distanzmessgerät 100 eine fixe Additionskonstante vorgeben, die auf den ausgewählten Referenzanschlag, d.h. hier einen der Referenzanschläge 50A bis 50D, bezogen ist. Die den Referenzanschlägen 50A bis 50D zugeordneten Additionskonstanten weichen um bis zu 10 cm oder mehr voneinander in ihren Werten ab, abhängig von der Entfernung einer Anschlagkante des Referenzanschlags 50A bis 50D zu dem Referenznullpunkt NP des Distanzmessgeräts 100. Eine vergleichsweise große Messunsicherheit wird bei der vorliegenden Ausführungsform des Distanzmessgeräts 100 dadurch vermieden, dass dem Nutzer deutlich über ein in Bezug auf Fig. 4 und Fig. 5 erläutertes optisches Signalmittel gezeigt wird, welchen der Referenzanschläge 50A bis 50D er ausgewählt hat. So ist sichergestellt, dass der Nutzer bei Anwendung des Distanzmessgeräts 100 auch tatsächlich den ausgewählten Referenzanschlag zur Messung des Abstands zu einem Zielobjekt nutzt. Ist dieses sichergestellt, so wird der Abstand des Referenzanschlags 50A bis 50D bis zum Zielobjekt 200, d.h. der Abstand vom Referenznullpunkt NP zum Zielobjekt 200 zuzüglich der richtigen Additionskonstante, korrekt angezeigt.

So zeigt Fig. 3 in der mittleren Darstellung eine Nutzung des Distanzmessgeräts 100 mit dem wichtigsten Referenzanschlag, nämlich dem hinteren Referenzanschlag 50A an einer externen Referenzfläche 300 eines Gegenstands zur Messung eines Abstands mittels der optischen Messstrahlung 1 zum Messobjekt 200. Der Abstand wird vorliegend zwischen einem Messpunkt P₂ des Messobjekts 200 und dem Referenznullpunkt NP des Distanzmessgeräts 100 mittels der Messeinrichtung 20 ermittelt. Anschließend wird der Abstand zwischen einer externen Referenzfläche 300 und dem Messpunkt P₂ unter Wahl der korrekten Additionskonstante angezeigt, nämlich unter Wahl der dem Referenzanschlag 50A zugeordneten Additionskonstante.

In der oberen in Fig. 3 gezeigten Situation wird der Abstand zu einem Messpunkt P₁ des Messobjekts 200 über die Messstrahlung 1 mittels der Messeinrichtung 20 gemessen. Die Messung erfolgt wiederum in Bezug auf die externe Referenzfläche 300 des Gegenstands, diesmal jedoch unter Nutzung eines vorderen Referenzanschlags 50B des Distanzmessgeräts 100. In dem Fall wird also der Abstand zwischen dem Messpunkt P₁ des Zielobjekts 200 und einem Referenznullpunkt N P des Geräts 100 bestimmt und dann unter Zuschlag der richtigen Additionskonstante dem Nutzer angezeigt, d.h. unter Nutzung der dem Referenzanschlag 50B zugeordneten Additionskonstante.

In der unteren in Fig. 3 dargestellten Situation wird ein Abstand über die Messstrahlung 1 zu einem Messpunkt P₃ des Zielobjekts 200 gemessen, wiederum in Bezug auf die externe Referenzfläche 300 des Gegenstands. Einzig im Unterschied zu den beiden vorher erläuterten Situationen erfolgt diesmal die Abstandsmessung in Bezug auf einen Referenzanschlag 50D, welcher mit einer Messverlängerung 60 des Gehäuses 10 verbunden ist. In dem Fall wird also zur Anzeige des Abstands in der Sichtanzeige 40 des Distanzmessgeräts 100 die dem Referenzanschlag 50D zugeordnete Additionskonstante genutzt, um dem Nutzer den richtigen Abstand anzuzeigen. Die Messverlängerung 60 kann in unterschiedlichster Form ausklappbar, ausziehbar oder anschraubbar ausgeführt sein. Unter einer Messverlängerung 60 ist grundsätzlich auch ein Stativ zu verstehen, wie es in Fig. 1 schematisch gezeigt und was aus der weiteren Erläuterung der folgenden Fig. 4 und Fig. 5 beispielhaft ersichtlich wird. In einer hier nicht dargestellten Variante kann ein Distanzmessgerät 100 ein in Fig. 1 gezeigtes Stativgewinde aufweisen, dessen Mittelpunkt als Referenzanschlag 50C dienen kann - z.B. in der Fig. 4 (c) gezeigten Weise.

Zur Bestimmung eines Abstands zwischen einem Zielobjekt 200 und dem Referenznullpunkt NP des Distanzmessgeräts 100 können eingangs erläuterte Verfahren zur Anwendung kommen. Vorliegend weist das Distanzmessgerät 100 eine optische Messstrahlung 1 nutzende Messeinrichtung 20 auf, die auf einer Laufzeitmessung basiert. Zwei Varianten der Messeinrichtung 20A, 20B, wie sie für eine Messeinrichtung 20 verwendet werden können, sind beispielhaft in Fig. 2 (a) und Fig. 2 (b) gezeigt. Beide Messeinrichtungen 20A, 20B weisen eine Lasereinheit 21, z.B. eine Laserdiode sowie eine Sendeoptik 22 und eine Empfangsoptik 23 auf. Die Messeinrichtung 20A, 20B weist auch einen eine optische Achse aufweisenden optischen Sendepfad 24 zur Aussendung von Messstrahlung 1 auf das Zielobjekt 200 auf. Außerdem weist die Messeinrichtung 20A, 20B einen eine optische Achse aufweisenden optischen Empfangspfad 25 zum Empfang von vom Zielobjekt 200 reflektierter und/oder gestreuter Messstrahlung 2, wie diese in Fig. 3 dargestellt ist, auf. Im Empfangspfad 25 ist auch ein Detektor 26 zur Detektion der reflektierten und/oder gestreuten Messstrahlung 2 angeordnet. Die Empfangsoptik 23 dient in beiden Fällen der Messeinrichtung 20A, 20B zur Fokussierung der reflektierten und/oder gestreuten Messstrahlung 2 auf den Detektor 26, z.B. eine Fotodiode. Die Messeinrichtung 20A ist in Fig. 2 (a) mit einer separaten Sendeoptik 22 und Empfangsoptik 23 ausgebildet, sodass der Sendepfad 24 und der Empfangspfad 25 nicht überlappen. Diese Anordnung der Pfade 24, 25 in der Messeinrichtung 20A wird auch als biaxial bezeichnet. Im Unterschied dazu ist die Messeinrichtung 20B mit einer koaxialen Anordnung der Pfade 24, 25 ausgebildet, wobei der Sendepfad 24 und der Empfangspfad 25 über einen Strahlteiler 27 zusammengebracht werden und in der beiden gemeinsamen Sende- und Empfangsoptik 22, 23 überlappen. Jeweils im Bereich zwischen Lasereinheit 21 und Strahlteiler 27 bzw. zwischen Detektor 26 und Strahlteiler 27 sind der Sendepfad 24 und der Empfangspfad 25 wiederum separat geführt.

Konkret wird bei der als Laserdistanzmesseinheit ausgebildeten Messeinrichtung 20A, 20B Messstrahlung 1 einer Lasereinheit 21 in Form einer Laserdiode mit einer optischen Linse der Sendeoptik 22 gebündelt. Die gebündelte Messstrahlung 1 wird ausgehend von der vorderen Gehäuseseite 10B, wie sie in Fig. 1 gezeigt ist, auf das Zielobjekt 200 - beispielsweise dort einen Messpunkt P₁, P₂, P₃ - gerichtet und bildet am Messpunkt P₁, P₂, P₃ einen Lichtfleck. Die reflektierte und/oder gestreute Messstrahlung 2 wird mit einer optischen Linse der Empfangsoptik 23 in der erläuterten Weise auf die aktive Fläche einer Fotodiode des Detektors 26 abgebildet. Die Messeinrichtung 20A kann biaxial oder, wie bei der Messeinrichtung 20B, koaxial ausgeführt sein. Zur Bestimmung der Entfernung des Zielobjekts 200 zum Referenznullpunkt NP des Distanzmessgeräts 100 - entsprechend dem Hin- und Rückweg - wird die Messstrahlung 1, vorliegend Laserlicht, moduliert. Eine Modulation kann impulsförmig oder auch sinusförmig erfolgen. Die Modulation erfolgt derart, dass die Zeitdifferenz zwischen einem Aussenden und Empfangen einer Messstrahlmodulation messbar ist. Über den Faktor der Lichtgeschwindigkeit kann also auf die einfache Entfernung zwischen dem Referenznullpunkt NP des Distanzmessgeräts 100 und dem Zielobjekt 200 geschlossen werden. Dies kann in einer nicht gezeigten Steuereinrichtung berechnet werden.

In den meisten Fällen wird für eine Messung des Abstands das Distanzmessgerät 100 gemäß der mittleren Darstellung der Fig. 3 mit seiner hinteren Gehäuseseite 10A, d.h. unter Nutzung des Referenzanschlags 50A, auf die Referenzfläche 300 eines Gegenstands, beispielsweise eine Wand oder ein Fußboden oder dergleichen, in Anschlag gebracht. Die hintere Gehäuseseite 10A umfasst somit den hinteren Referenzanschlag 50A. Ist dieser einmal eingestellt, beziehen sich nun alle im Folgenden gemessenen Abstände zu einem Zielobjekt 200 auf diesen Referenzanschlag 50a. Hat der Nutzer einmal einen solchen Referenzanschlag 50A beispielsweise über die Bedien- und Eingabeanordnung 30 eingestellt, wird in einer zuvor erläuterten Steuereinrichtung die diesem Referenzanschlag 50A zugeordnete Additionskonstante zum gemessenen Abstand des Referenznullpunkts NP addiert und ein entsprechender Abstand in der Sichtanzeige 40 angezeigt.

Dem Konzept der Erfindung folgend weist das Distanzmessgerät 100 - wie in Fig. 4 Ansichten (a) bis (e) dargestellt - eine Anzahl von für die Messung nutzerauswählbaren Referenzanschlägen 50A, 50B, 50C, 50D.1 und 50D.2 auf. Darüber hinaus weist das Distanzmessgerät 100 eine Anzahl von vereinzelten optischen Signalmitteln 80A, 80B, 80C, 80D.1 und 80D.2 auf. Jedem einzelnen Referenzanschlag 50A, 50A, 50C, 50D.1, 50D.2 ist separat jeweils eines der vereinzelten optischen Signalmittel 80A, 80B, 80C, 80D.1 und 80D.2 eindeutig zugeordnet, wobei jedes derselben ebenfalls separat von der Sichtanzeige 40 gebildet ist. Zwar ist in der Sichtanzeige 40, wie aus Fig. 4 (a) bis (e) ersichtlich - durch ein Symbol 3A, 3B, 3C, 3D.1, 3D.2 jeweils der ausgewählte Referenzanschlag dargestellt. Dem Konzept der Erfindung folgend ist dieser jedoch überflüssig und kann entfallen. Bei der vorliegenden Ausführungsform eines Distanzmessgeräts 100 ist dem Nutzer über die optischen Signalmittel 80A bis 80D.2 deutlich gezeigt, welcher der Referenzanschläge 50A bis 50D.2 tatsächlich ausgewählt ist. Die optischen Signalmittel 80A bis 80D.2 sind vorliegend als Leuchtfelder mit einem über eine LED gebildeten Lichtsignal balkenartig ausgeführt. Die hintere Gehäuseseite 10A weist, wie aus Fig. 4 (a) ersichtlich, ein dem hinteren Referenzanschlag 50A zugeordnetes optisches Signalmittel 80A auf. Dieses wird bei einer Verwendung des Distanzmessgeräts 100, wie es in der mittleren Position der Fig. 3 gezeigt ist, aktiviert. Die vordere Gehäuseseite 10B des Distanzmessgeräts 100 weist ein dem vorderen Referenzanschlag 50B zugeordnetes vorderes Signalmittel 80B auf. Das vordere Signalmittel 80B wird in einer Verwendung des Distanzmessgeräts 100, wie es in der oberen Ansicht der Fig. 3 gezeigt ist, aktiviert bei ausgewähltem vorderen Referenzanschlag 50B. Die zugehörige Darstellung ist Fig. 4 (b).

Wie in Fig. 4 (c) ersichtlich, weist das Gehäuse 10 auch einen mittleren, vorliegend seitlichen Referenzanschlag 50C auf, der als Mittelpunkt eines Stativgewindes gebildet ist. Dem mittleren, vorliegend seitlichen Referenzanschlag 50C ist an einer oberen Gehäuseseite ein optisches Signalmittel 80C zugeordnet. Dieses wird aktiviert, sobald der Referenzanschlag 50C genutzt wird, d.h. das Distanzmessgerät 100 auf ein Stativ unter Nutzung des Stativgewindes geschraubt wird.

Wie aus Fig. 4 (d) ersichtlich, ist das Gehäuse 10 mit einer ersten Messverlängerung 60.1 versehen, die einen ersten Messanschlag 50D.1 aufweist. Wie aus Fig. 4 (e) ersichtlich, weist das Gehäuse 10 des Distanzmessgeräts 100 vorliegend auch eine zweite Gehäuseverlängerung 60.2 auf, die mit einem zweiten Messanschlag 50D.2 versehen ist. Den Messanschlägen 50D.1, 50D.2 ist vorliegend ein längs der längeren Gehäuseachse ausgerichtetes optisches Signalmittel 80D.1 bzw. 80D.2 zugeordnet.

In Fig. 5 sind die Signalmittel 80A bis 80D zusammen mit den Referenzanschlägen 50A bis 50D in Zusammenschau dargestellt. In den Ansichten (a) bis (e) der Fig. 4 sind nur die jeweils aktivierten Signalmittel 80A bis 80D, wie sie dem jeweils ausgewählten Referenzanschlag 50A bis 50D zugeordnet sind, gezeigt.

Insgesamt ist bei der vorliegenden Ausführungsform des Distanzmessgeräts 100 erkennbar, dass eine Position des Referenzanschlags 50A bis 50D und eine Platzgestaltung des zugeordneten optischen Signalmittels 80A bis 80D am Gehäuse 10 vorbestimmt korrelieren, nämlich über eine Ortskorrelation. Die Ortskorrelation ist vorliegend, wie aus Fig. 4 (a) bis (e) erkennbar, derart, dass ein Platz des zugeordneten, aktivierten optischen Signalmittels 80A, 80B, 80C am Gehäuse 10 zu einer Position des ausgewählten Referenzanschlags 50A bis 50C näher benachbart ist als zu einer Position eines nicht ausgewählten Referenzanschlags. Das heißt, bei Auswahl des Referenzanschlags 50A wird nur das optische Signalmittel 80A aktiviert. Bei Auswahl des Referenzanschlags 50B wird nur das optische Signalmittel 80B aktiviert. Bei Auswahl des Referenzanschlags 50C wird nur das optische Signalmittel 80C aktiviert. Diese Korrelation gilt auch für den Referenzanschlag 50D und das zugeordnete optische Signalmittel 80D. Darüber hinaus ist das optische Signalmittel 80D anders ausgerichtet als die optischen Signalmittel 80A bis 80C. Dies zeigt dem Nutzer intuitiv, dass nunmehr die Messverlängerung 60.1 bzw. 60.2 nunmehr den Referenzanschlag 50D.1 oder 50D.2 bildet, soweit er diese ausgewählt hat. Dies kann über die Bedien- und Eingabeanordnung 30 oder durch Ausziehen, Ausklappen oder Anbringen der Messverlängerung 60.1, 60.2 erfolgt sein.

Die optischen Signalmittel 80A bis 80D sind nicht nur über ihre Ortskorrelation, d.h. Platzgestaltung am Gehäuse 10, mit der Position eines Referenzanschlags 50A bis 50D assoziiert. Darüber hinaus können diese weitere assozüerende Ausgestaltungen aufweisen, die auf einen ausgewählten Referenzanschlag 50A bis 50D hinweisen. Beispielsweise kann dies eine Größengestaltung oder eine Formgestaltung, beispielsweise in Form eines Pfeils oder Symbols, des optischen Signalmittels 80A bis 80D betreffen.

## Patentansprüche

1. Distanzmessgerät (100), insbesondere in Form eines Handgeräts, für eine berührungslose Messung eines Abstands zu einem Zielobjekt (200), aufweisend:
- ein Gehäuse (10), insbesondere ein zur händischen Benutzung ausgebildetes Gehäuse (10);
- eine im Gehäuse (10) angeordnete, optische Messstrahlung (1) nutzende Messeinrichtung (20), mittels welcher der Abstand zum Zielobjekt (200) berührungslos messbar ist;
- wenigstens einen am Gehäuse (10) angeordneten für die Messung nutzerauswählbaren Referenzanschlag (50A - 50D);
- eine am Gehäuse (10) angeordnete Bedien- und Eingabeanordnung (30) ausgebildet zur Bedienung wenigstens der Messeinrichtung (20);
- eine am Gehäuse (10) angeordnete mit der Bedien- und Eingabeanordnung (30) gekoppelte Sichtanzeige (40), auf der ein Bedienzustand und/oder der gemessene Abstand von einem ausgewählten Referenzanschlag (50A - 50D) zum Zielobjekt (200) darstellbar ist;
**dadurch gekennzeichnet, dass**
- das Gehäuse (10) wenigstens ein von der Sichtanzeige (40) separates optisches Signalmittel (80A - 80D) aufweist, das dem Referenzanschlag (50A - 50D) eindeutig zugeordnet und im Falle des ausgewählten Referenzanschlags (50A - 50D) aktivierbar ist.

2. Distanzmessgerät (100) nach Anspruch 1, **dadurch gekennzeichnet, dass** eine Position des Referenzanschlags (50A - 50D) und die Ausgestaltung eines zugeordneten optischen Signalmittels (80A - 80D) am Gehäuse (10) vorbestimmt derart korrelieren, dass mit dem zugeordneten Signalmittel (80A - 80D) die Position des Referenzanschlags (50A - 50D) assoziierbar ist.

3. Distanzmessgerät (100) nach Anspruch 1 oder 2, **dadurch gekennzeichnet, dass** eine Position der Referenzanschlags (50A - 50D) und ein Platz des zugeordneten optischen Signalmittels (80A - 80D) am Gehäuse (10) vorbestimmt derart korrelieren, dass mit einem Platz des zugeordneten optischen Signalmittels (80A - 80D) die Position assoziierbar ist.

4. Distanzmessgerät (100) nach einem der Ansprüche 1 bis 3, **dadurch gekennzeichnet, dass** ein Platz des zugeordneten aktivierten optischen Signalmittels (80A - 80D) zu einer Position des ausgewählten Referenzanschlags (50A - 50D) näher benachbart ist, als zu einer Position eines nicht ausgewählten Referenzanschlags (50A - 50D).

5. Distanzmessgerät (100) nach einem der Ansprüche 1 bis 4, **dadurch gekennzeichnet, dass** die Ausgestaltung des zugeordneten optischen Signalmittels (80A - 80D) am Gehäuse (10) eine oder mehrere der Gestaltungen: Farbgestaltung, Richtungsgestaltung, Größengestaltung, Formgestaltung umfasst.

6. Distanzmessgerät (100) nach einem der Ansprüche 1 bis 5 **dadurch gekennzeichnet, dass** der nutzerauswählbare Referenzanschlag (50A - 50D) durch Betätigung oder durch Anbringen des Referenzanschlags am Distanzmessgerät (100) auswählbar ist.

7. Distanzmessgerät (100) nach einem der Ansprüche 1 bis 6, **dadurch gekennzeichnet, dass** der nutzerauswählbare Referenzanschlag (50A - 50D) über die Bedien- und Eingabeanordnung (30) auswählbar ist.

8. Distanzmessgerät (100) nach einem der Ansprüche 1 bis 7, **dadurch gekennzeichnet, dass** das Gehäuse (10) eine Anzahl von für die Messung nutzerauswählbaren Referenzanschlägen (50A - 50D) und eine Anzahl von vereinzelten optischen Signalmitteln (80A - 80D) aufweist, wobei jedem einzelnen Referenzanschlag (50A - 50D) separat jeweils eines der vereinzelten optischen Signalmittel (80A - 80D) eindeutig zugeordnet ist.

9. Distanzmessgerät (100) nach einem der Ansprüche 1 bis 8, **dadurch gekennzeichnet, dass** die Anzahl von Referenzanschläge (50A - 50D) einen gehäusefesten Referenzanschlag (50A, 50B) umfasst, insbesondere einen mit dem Gehäuse (10) verbundenen Referenzanschlag umfasst (50C, 50D).

10. Distanzmessgerät (100) nach einem der Ansprüche 1 bis 9 **dadurch gekennzeichnet, dass** das Gehäuse (10) eine vordere Gehäuseseite (10B) mit einem vorderen Referenzanschlag (50B) und/oder eine obere oder untere Gehäuseseite mit einem oberen oder unteren Referenzanschlag und/oder eine seitliche Gehäuseseite (10C) mit einem seitlichen Referenzanschlag (50C) und/oder eine hintere Gehäuseseite (10A) mit einem hinteren Referenzanschlag (50A) aufweist, wobei jedem der Referenzanschläge (50A - 50D) ein von der Sichtanzeige (40) separates optisches Signalmittel (80A - 80D) eindeutig zugeordnet und im Falle eines ausgewählten Referenzanschlag (50A - 50D) aktivierbar ist.

11. Distanzmessgerät (100) nach einem der Ansprüche 1 bis 10, **dadurch gekennzeichnet, dass** das Gehäuse (10) eine mit diesem verbundene oder verbindbare Messverlängerung (60.1, 60.2) oder ein Stativ mit einem Referenzanschlag (50C, 50D) an einer Seite (10D) aufweist, wobei dem Referenzanschlag (50C, 50D) ein von der Sichtanzeige (40) separates optisches Signalmittel (80C, 80D) eindeutig zugeordnet und im Falle des ausgewählten Referenzanschlags (50C, 50D) aktivierbar ist.

12. Distanzmessgerät (100) nach einem der Ansprüche 1 bis 11, **dadurch gekennzeichnet, dass** das optische Signalmittel (80A - 80D) in Form eines Leuchtmittels, wie einer Leuchtdiode, einer Signallampe oder dergleichen zur Aussendung eines Lichtsignals gebildet ist.

13. Distanzmessgerät (100) nach einem der Ansprüche 1 bis 12, **dadurch gekennzeichnet, dass** die optische Messstrahlung (1) nutzende Messeinrichtung (20), insbesondere zur Laufzeitmessung, umfasst:
- eine Lasereinheit (21)
- eine Sende- und Empfangsoptik (22, 23)
- einen eine optische Achse aufweisenden optischen Sendepfad (24) zur Aussendung von Messstrahlung (1) auf das Zielobjekt (200)
- einen eine optische Achse aufweisenden optischen Empfangspfad (25) zum Empfang von vom Zielobjekt (200) reflektierter und/oder gestreuter Messstrahlung (2).
